Europäisches Patentamt

(19) European Patent Office

Office européen des brevets

(11) Publication number: **0 107 269**
**A2**

## (12) EUROPEAN PATENT APPLICATION

(21) Application number: **83303781.5**

(22) Date of filing: **30.06.83**

(51) Int. Cl.³: **B 09 B 3/00**

(30) Priority: **28.08.82 GB 8224751**

(43) Date of publication of application: **02.05.84**
Bulletin **84/18**

(84) Designated Contracting States: **AT BE CH DE FR GB IT LI LU NL SE**

(71) Applicant: **W.B. Black & Sons (Holdings) Limited, Kings Inch Road, Renfrew PA4 8XU Scotland (GB)**

(72) Inventor: **Black, William Brown, Penwold Kilbarchan Road, Bridge of Weir Renfrewshire Scotland (GB)**

(74) Representative: **Huskisson, Frank Mackie et al, FITZPATRICKS 4 West Regent Street, Glasgow G2 1RS Scotland (GB)**

(54) **Asbestos disposal.**

(57)  Asbestos is transported to a sealed asbestos containment area, comminuted and mixed with a binder, pressed into a block, and optionally shrink-wrapped or painted to seal the block.
The containment area comprises a modified cargo container housing a baling machine, and optionally paint spray apparatus or shrink-wrapping equipment, and is fitted with means for introducing asbestos thereto including means for forming a fine spray curtain of water through which the asbestos must pass in order to reduce hazards of air-borne asbestos particles.

"Asbestos Disposal"

This invention relates to the disposal of asbestos.

Asbestos is the generic name for a group of impure magnesium silicate minerals which occur in fibrous form. It has been widely used for many purposes where incombustible, non-conducting or chemically-resistant fibre is required, such as in roofing.

It is known that asbestos dust particles are an active carcinogen and thus present a serious health hazard and, consequently, precautions must be taken both in the dismantling of structures where asbestos has been used and in the disposal of the asbestos so used.

It is an object of this invention to provide an improved method for the disposal of asbestos.

In accordance with the present invention, asbestos is transported to a sealed area wherein personnel are protected, the asbestos is broken down to a finer consistency and mixed with a binding agent, blocks are produced from the mix and may be coated with a sealing agent such as a paint sealant or a plastics film, and the blocks are transported to an authorised tip and are stacked.

Further according to this invention there is provided apparatus suitable for carrying out the method of this invention comprising a portable container which can be sealed as an asbestos containment area, a pressing machine capable of forming blocks from particulate material and contained within the container, means for supplying a binding agent to the pressing machine, and means for introducing asbestos through a wall of the container to the pressing machine including means for forming a fine spray curtain of water through which the asbestos is passed to the pressing machine.

Preferably the container also houses a wrapping machine capable of covering a block of asbestos/binding agent in a plastic film.

Alternatively the container may house paint spray apparatus for sealing a block of asbestos/binding agent by means of a coating of paint.

The invention will now be described by way of the following Example.

### Example

Stage 1. Asbestos is removed from structures by conventional means and transported to a sealed area which preferably is a portable container housing equipment required for treatment by the method of this invention. Personnel in and entering this area are protected in accordance with the Asbestos Regulations.

Stage 2. In this embodiment of the invention the asbestos is broken down to a finer consistency and is mixed with a binding agent.

Stage 3. The asbestos mix is loaded into a baling machine, which produces compressed blocks of a size enabling easy handling and stacking, for example 2' x 1' x 1' is a convenient size but any cuboidal shape would do.

Stage 4. The blocks are transported to an authorised tip and are stacked. The blocks may be coated with a sealing agent such as a paint sealant or a plastics film prior to transportation to the tip.

The apparatus for carrying out this invention may suitably comprise a modified cargo container which provides an easily transportable asbestos containment area. Air conditioning; improved door sealing and fitting of lighting and power supply are examples of modifications required.

The container houses a baling machine which is capable of forming compressed blocks of particulate asbestos/cement of a suitable size for handling and stacking.

One wall of the container is fitted with a detachable loading chute which is provided with a water supply conduit and spray nozzles capable of producing a fine spray mist covering the chute. The fine spray mist carries down fine particulate asbestos which otherwise would remain air-borne for some time and present a health hazard.

The container also houses a wrapping machine which can shrink wrap high density polyethylene sheeting on to the formed blocks of asbestos/cement thereby providing a clean, safe and easily handled package for disposal.

An optional alternative to wrapping is to provide paint spray apparatus within the container which can be used to seal the blocks by coating with paint.

- 4 - 0107269

<u>Claims:</u>

1. A method for the disposal of asbestos comprising transporting the asbestos to an asbestos containment area, breaking the asbestos down to a fine particulate consistency, mixing particulate asbestos with a binding agent, and compressing the mixture of asbestos and binding agent to form a block of a convenient size for handling and stacking.

2. A method according to claim 1 wherein the block is sealed with a plastic film.

3. A method according to claim 1 wherein the block is sealed with a coating of paint.

4. Apparatus for carrying out the method claimed in claim 1 comprising a portable container which can be sealed as an asbestos containment area, a pressing machine capable of forming blocks from particulate material and contained within the container, means for supplying a binding agent to the pressing machine, and means for introducing asbestos through a wall of the container to the pressing machine including means for forming a fine spray curtain of water through which the asbestos is passed to the pressing machine.

5. Apparatus according to claim 4 wherein the container also houses a wrapping machine capable of covering a block of asbestos/binding agent in a plastic film.

6. Apparatus according to claim 4 wherein the container also houses paint spray apparatus for sealing a block of asbestos/ binding agent by means of a coating of paint.